# EUROPEAN PATENT APPLICATION

(11) **EP 3 032 474 A1**
(43) Date of publication of application: **15.06.2016**
(21) Application number: 15199730.1
(22) Date of filing: 14.12.2015
(51) Int. Cl.: G06Q 10/06

(54) **MANAGEMENT SYSTEM FOR FOOD SAFETY AND MANAGING METHOD FOR THE SAME**

(30) Priority: 12.12.2014 TW 103143620
(71) Applicant: Net Alliance Co Ltd, New Taipei City (TW)
(72) Inventor: Chen, Chi-Ching, New Taipei City (TW)
(74) Representative: Baldwin, Mark

(57) **Abstract**

A management system for food safety and a managing method for the same are disclosed. The management system comprises an authentication unit, an inspection unit, a batch of identification tags, and an information device. Each identification tag is an RFID tag. Consumers obtain the product information by using the information device with an application to read the identification tag on the product. Furthermore, the unique internal code in the identification tag is used for improving the product traceability and anti-counterfeit in the present invention.

## Description

### [Field of the invention]

The invention relates to a management system for food safety and a managing method for the same.

### [Background of the invention]

For improving the traceability of food, some factories dispose a tag with quick response code (QR code) on each product. A device with a QR code reader (such as a smart phone) can be used to read the tag on the product and the browser on the device connected to the website with the address contained in the QR code to access the product pedigree on the official website of the product. People can obtain the composition, source, and more information concerning the product from the product pedigree.

However, it is easy to copy a QR code. When people use a device to read a tag with a copied QR code, the browser on the device is also connected to the same website with the same address. Therefore, using a QR code system is not safe enough for food safety management..

Consequently, an effective management system for food safety is required by people and the industry.

### SUMMARY OF THE INVENTION

It is an object of the invention to provide a management system for food safety and a managing method for the same.

It is another object of the invention to provide a management system for food safety which uses an RFID tag with a unique internal code as an identification tag for preventing the tag to be counterfeited.

It is still another object of the invention to provide a managing method for food safety, wherein the tags and the products are one-to-one corresponded for improving the traceability and anti-counterfeit.

The invention provides a management system for food safety, comprising: an authentication unit for accepting an application for authentications on a batch of products from a user, wherein the authentication unit has a product database and a management platform, the product database is used for storing a product information of the batch of product, the management platform is connected to the product database for management and querying of the product database; an inspection unit for performing a product inspection process according to a product classification of the batch of products; a batch of identification tags provided by the authentication unit after the product inspection process, wherein each identification tag of the batch of identification tags is an RFID tag having a unique internal code, each identification tag is corresponding to and disposed on one product of the batch of products; and an information device having a display and an application, wherein the information device is able to read the identification tag and connect to a network; wherein the unique internal codes of the batch of identification tags are stored in the product database and related to the product information of the batch of products; when the information device is used to read the identification tag disposed on one product of the batch of products and obtain the unique internal code of the identification tag, the application on the information device connects the information device to the management platform of the authentication unit by the network and displays the product information corresponding to the unique internal code on the display of the information device.

In one embodiment of the invention, the management system further comprises a batch of frangible stickers provided by the authentication unit, wherein each frangible sticker of the batch of frangible stickers is corresponding to one product of the batch of products and adhered to a seal of the corresponding product.

In one embodiment of the invention, each frangible sticker of the batch of frangible stickers is combined with the corresponding identification tag of the batch of identification tags.

In one embodiment of the invention, a product pedigree of the batch of products is stored in the product database and related to the product information of the batch of products.

In one embodiment of the invention, the application on the information device connects the information device to the management platform of the authentication unit and displays the product pedigree corresponding to the unique internal code on the display of the information device when a consumer uses the information device to read the identification tag disposed on one product of the batch of products and obtain the unique internal code of the identification tag.

In one embodiment of the invention, the information device is selectively one of a mobile phone, an RFID reader, a computer, a personal digital assistant, or a multimedia device.

In one embodiment of the invention, the product of the batch of products is selectively one of a food or a food ingredient.

The invention further provides a managing method for food safety, comprising the steps of: accepting an application of a user for authentications on a batch of products; performing a product inspection process according to a product classification of the batch of products; providing a batch of identification tags, wherein each identification tag of the batch of identification tags is an RFID tag with a unique internal code, each identification tag is corresponding to one product of the batch of products; disposing each identification tag of the batch of identification tags on corresponding product of the batch of products; providing a product database; storing a product information of the batch of products and the unique internal codes of the batch of identification tags in the product database and relating the internal codes of the batch of identification tags to the product information of the batch of products; providing a information device having a display and an application, wherein the information device is able to read the identification tags and connect to a network; providing a management platform connected to the product database; and using the information device to read the identification tag disposed on one product of the batch of products and obtain the unique internal code of the identification tag, then using the application to connect the information device to the management platform by the network and display the product information corresponding to the unique internal code on the display of the information device.

In one embodiment of the invention, the managing method further comprises a step of sealing the batch of products before the step of performing the product inspection process.

In one embodiment of the invention, the product inspection process is a random sampling inspection process.

In one embodiment of the invention, the managing method further comprises a step of providing a batch of frangible stickers, wherein each frangible sticker of the batch of frangible stickers is corresponding to one product of the batch of products and adhered to a seal of the corresponding product.

In one embodiment of the invention, each frangible sticker of the batch of frangible stickers is combined with a corresponding identification tag of the batch of identification tags.

In one embodiment of the invention, the managing method further comprises a step of storing a product pedigree of the batch of products in the product database and relating the product pedigree to the product information of the batch of products.

In one embodiment of the invention, the application on the information device connects the information device to the management platform by the network and displays the product pedigree corresponding to the unique internal code on the display when a user or a consumer uses the information device to read the identification tag disposed on one product of the batch of products.

In one embodiment of the invention, the information device is selectively one of a mobile phone, an RFID reader, a computer, a personal digital assistant or a multimedia device.

In one embodiment of the invention, the product is selectively one of a food or a food ingredient.

### BRIEF DESCRIPTION OF THE DRAWINGS

- Fig. 1: is a schematic diagram of a management system for food safety in accordance with one embodiment of the invention.
- Fig. 2: is a schematic diagram showing an identification tag in accordance with one embodiment of the invention disposed on a product.
- Fig. 3: is a schematic diagram showing an identification tag in accordance with another embodiment of the invention disposed on a product.
- Fig. 4: is a flow chart illustrating a managing method for food safety in accordance with one embodiment of the invention.

### DETAILED DESCRIPTION

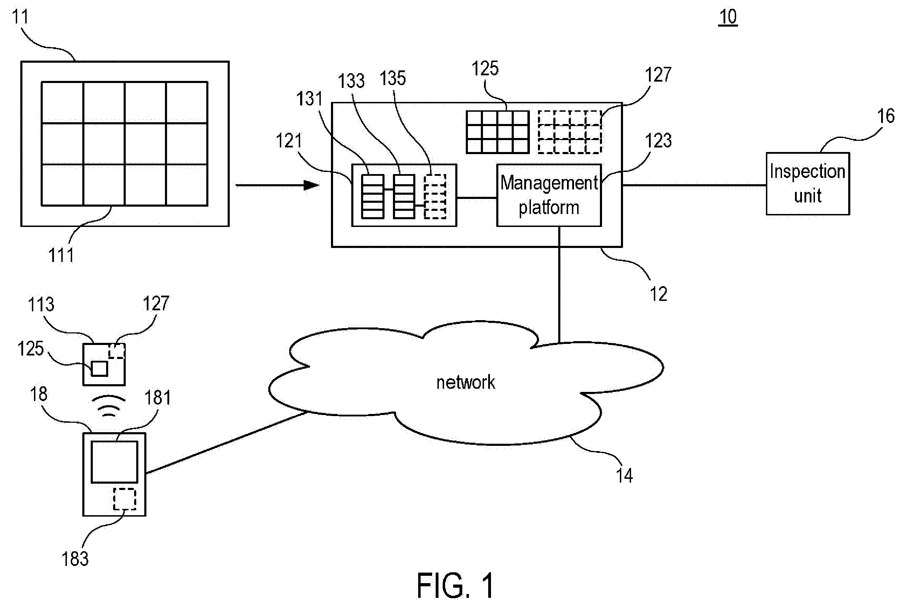

Referring to Fig. 1, there is shown a management system for food safety 10 in accordance with one embodiment of the invention. The management system 10 comprises an authentication unit 12, an inspection unit 16, a batch of identification tags 125 and an information device 18. Users can apply to the authentication unit 12 for authentications on the batch of products 11. The batch of products 11 comprises a plurality of products 111. The authentication unit 12 comprises a product database 121 and a management platform 123. The product database 121 is used for storing product information relating to the batch of products 11. The management platform 123 is connected to the product database 123 for management and querying of the product database 121.

The inspection unit 16 performs a product inspection process according to the product classification of the batch of products 11. After the product inspection process, the authentication unit 12 provides a batch of identification tags 125 Each identification tag 125 is an RFID tag storing a unique internal code 133. The identification tags 125 correspond to and are disposed on the qualified products 111 of the batch of products 11. The unique internal codes 133 of the identification tags 125 are stored in product database 121 and correspond, or are linked or indexed, to the product information 131 of the batch of product 11. The information device 18 comprises a display 181 and an application 183 and is able to read the identification tag 125 and connect to a network 14.

When a consumer uses the information device 18 to read the identification tag 125 disposed on the product 113 and obtain the unique internal code 133 of the identification tag 125, the application 183 on the information device 18 connects the information device 18 to the management platform 123 of the authentication unit 12 via the network 14 and displays the product information 131 corresponding to the unique internal code 133 on the display 181 of the information device 18.

The authentication unit 12 may provide a batch of frangible stickers 127 for the batch of products 11. Each frangible sticker 127 corresponds to one product 111 of the batch of products 11. Each frangible sticker 127 is adhered to the seal of the corresponding product 113 for recognising whether the product 113 has been unsealed, or opened. If the frangible sticker 127 on the product 113 is broken, that means that the product 113 has been unsealed. On the contrary, if the frangible sticker 127 is integral, intact or unbroken, it means the product 113 has not been unsealed.

The product database 121 may comprise the product pedigree 135 of the batch of product 11. When a consumer uses the information device 18 to read the identification tag 125 disposed on the product 113 and obtain the unique internal code 133 of the identification tag 125, the application 183 on the information device 18 connects the information device 18 to the management platform 123 of the authentication unit 12 via the network 14 and displays the product pedigree 135 corresponding to the unique internal code 133 on the display 181 of the information device 18.

The information device 18 may be any of a mobile phone, an RFID reader, a computer, a Personal Digital Assistant (PDA) or a multimedia device. The product 111 may be a food or a food ingredient.

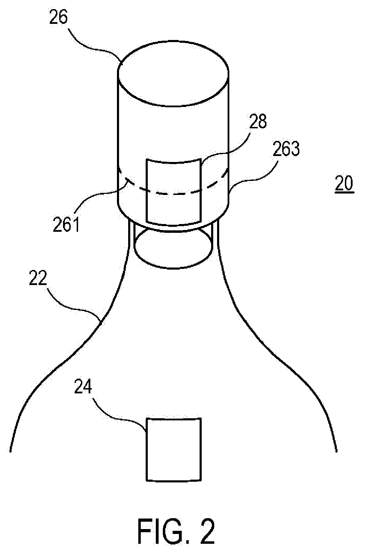

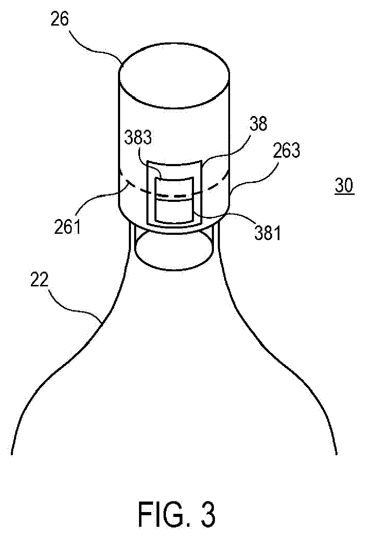

Referring to Figs. 2 and 3, there are shown identification tags in accordance with different embodiments of the invention disposed on products. In the embodiments of Figs. 2 and 3, bottled products 20 and 30 are used for purposes of illustration. However, the products in the invention are not limited to the described embodiments.

The identification tag 24 may be disposed on the container 22 of the product 20. Consumers may use an information device to read the identification tag 24 to have the product information of the product 20 can be shown on the information device. Furthermore, a frangible sticker 28 can be disposed on the seal of the product 20. For example, the seal of the product 20 in the present embodiment is on the cap 26. The cap 26 has a tearing line 261 and a cuff 263. The frangible sticker 28 is disposed on the tearing line 261 of the cap 26, as shown in Fig. 2. If the product 20 has been unsealed, that means the cap 26 has been torn off at the tearing line 261, which will break the frangible sticker 28. Consequently, if the frangible sticker 28 is integral, the user can be sure the product 20 has not been unsealed.

As shown in Fig. 3, the frangible sticker and the identification tag may be combined. The identification tag 38 comprises an RFID tag 381 and a frangible portion 383. In this embodiment, the identification tag 38 is disposed on the cap 26 of the product 30. The RFID tag 381 is disposed on the cuff 263 and the frangible portion 383 is disposed across the tearing line 261, as shown in Fig. 3.

In the present embodiment, only one identification tag 38 is needed for product 30 traceability and anti-counterfeit. Consumers can firstly observe whether the identification tag 38 is integral or not. If the identification tag 38 is integral, it can be seen with certainty that the product 30 has not being unsealed. Thus, it is known that the contents of the product 30 have not be changed or mixed with dopants. If the frangible portion 383 of the identification tag 38 is broken, it can be seen that the product 30 may have been unsealed.

After confirming that the identification tag 38 is integral, consumers can use an information device to read the RFID tag 381 of the identification tag 38. The application on the information device connects the information device to the management platform of the authentication unit via the network and displays the product information corresponding to the unique internal code of the RFID on the display of the information device.

Since the RFID tag 381 is disposed on the cuff 263 of the cap 26, even after the consumer has unsealed the product 30, the RFID tag 381 is still integral, or intact, so the information device can still be used to read the RFID tag 381 for querying the product information of the product 30.

In one embodiment, the identification tag 38 is made frangible for providing product traceability and anti-counterfeit before the product 30 is unsealed. In the present embodiment, the identification tag 38 will be damaged when the product 30 is unsealed. The RFID tag 381 of the identification tag 38 is also damaged and becomes unreadable for the information device.

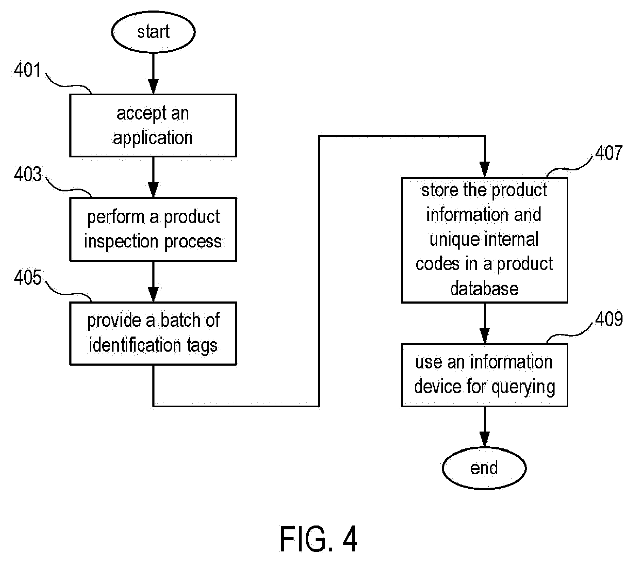

Fig. 4 is a flow chart that illustrates a managing method for food safety in accordance with one embodiment of the invention. In the managing method, the authentication unit accepts the application of a user for authentications on a batch of products firstly, as shown in step 401. The inspection unit performs a product inspection process according to the product classification of the batch of products, as shown in step 403. After the product inspection process, the authentication unit provides a batch of identification tags. Each identification tag corresponds to and is disposed on one product of the batch of products, as shown in step 405. Each identification tag is an RFID tag with a unique internal code.

The authentication unit provides a product database, stores the product information of the batch of product and the unique internal codes of the batch of identification tags in the product database and relates the unique internal codes of the batch of identification tags to the product information of the batch of product, as shown in step 407. The authentication unit further provides a management platform connected to the product database for management and querying of the product database.

Finally, in use a user or a consumer uses an information device provided with a display and a suitable application to read the identification tag disposed on one of the products and obtain the unique internal code of the identification. The application on the information device connects the information device to the management platform of the authentication unit via the network and displays the product information corresponding to the unique internal code on the display of the information device, as shown in step 409.

The managing method may further comprise sealing the batch of products before the step of performing the product inspection process. This prevents the products from being changed or mixed with dopants after the step of performing the product inspection process.

The product inspection process may be a random sampling inspection process. Since the batch of products has been sealed, an appropriate proportion of random sampling inspection is effective. Consequently, the cost and time required for product inspection process are greatly reduced.

The managing method may further comprise providing a batch of frangible stickers. Each frangible sticker corresponds to one product of the batch of products and is adhered to the seal of the corresponding product. Since the frangible sticker is frangible, if the product has been unsealed, the frangible sticker will be broken. Consumers can recognise the integrality of the product by the frangible sticker.

The frangible sticker and the identification tag may be combined together. In this way, only one identification tag is needed for product traceability and counterfeiting protection.

The managing method may further comprise storing the product pedigree of the batch of products in the product database and relating the product pedigree of the batch of products to the product information of the batch of products.

The information device may be used to read the identification tag disposed on any product of the batch of products and obtain the unique internal code of the identification tag. The application on the information device then connects the information device to the management platform of the authentication unit via the network and displays the product pedigree corresponding to the unique internal code on the display of the information device.

The information device may be any of a mobile phone, an RFID reader, a computer, a PDA, or a multimedia device. The product may be a food or a food ingredient.

By using the management system for food safety or the managing method for the same, the product traceability and anti-counterfeit are improved.

Although particular embodiments of the invention have been described in detail for purposes of illustration, various modifications and enhancements may be made without departing from the scope of the invention specified by the claims.

## Claims

1. A management system (10) for food safety comprising:
an authentication unit (12) for accepting an application for authentications on a batch of products (11) from a user, wherein the authentication unit (12) has a product database (121) and a management platform (123), the product database (121) being used for storing product information (131) of the batch of products (11) and the management platform (123) being connected to the product database (121) for management and querying of the product database (121);
an inspection unit (16) for performing a product inspection process according to a product classification of the batch of products (11);
a batch of identification tags (125, 24) provided by the authentication unit (12) after the product inspection process, wherein each identification tag (125) of the batch of identification tags (125) is an RFID tag having a unique internal code (133), each identification tag (125) corresponds to and is disposed on a respective said product (111, 20) of the batch of products (11); and
an information device (18) having a display (181) and an application (183), wherein the information device (18) is able to read the identification tags (125, 24) and connect to a network (14),
wherein the unique internal codes (133) of the batch of identification tags (125, 24) are stored in the product database (121) and related to the product information (131) of the respective products of the batch of products (11), and
wherein when the information device (18) is used to read the identification tag (125) disposed on a said product (111, 20) of the batch of products (11) to obtain the unique internal code (133) of the respective identification tag (125, 24), the application (183) on the information device (18) connects the information device (18) to the management platform (123) of the authentication unit (12) via the network (14) and displays the product information (131) corresponding to the unique internal code (133) on the display (181) of the information device (18).

2. The management system (10) as claimed in Claim 1, further comprising a batch of frangible stickers (127, 28) provided by the authentication unit (12), wherein each frangible sticker (127, 28) of the batch of frangible stickers (127, 28) corresponds to a respective said product (111, 20) of the batch of products (11) and is adhered to a seal (26) of the said product (111, 20).

3. The management system (10) as claimed in Claim 2, wherein each frangible sticker (127, 383) of the batch of frangible stickers (127, 383) is combined with the corresponding identification tag (125, 381) of the batch of identification tags (125).

4. The management system (10) as claimed in Claim 1, 2 or 3, wherein a product pedigree (135) of the batch of products (11) is stored in the product database (121) and related to the product information (131) of the batch of products (11).

5. The management system (10) as claimed in Claim 4, wherein the application (183) on the information device (18) connects the information device (18) to the management platform (123) of the authentication unit (12) and displays the product pedigree (135) corresponding to the unique internal code (133) of the identification tag on said product on the display (181) of the information device (18) when a consumer uses the information device (18) to read the said identification tag (125, 24).

6. The management system (10) as claimed in any one of the preceding Claims, wherein the information device (18) is a mobile phone, an RFID reader, a computer, a personal digital assistant, or a multimedia device.

7. The management system (10) as claimed in any one of the preceding Claims, wherein the product (111) of the batch of products (11) is a food or a food ingredient.

8. A managing method for food safety comprising:
accepting an application from a user for authentications on a batch of products (11);
performing a product inspection process according to a product classification of the batch of products (11);
providing a batch of identification tags (125, 24), wherein each identification tag (125, 24) of the batch of identification tags (125, 24) is an RFID tag with a unique internal code (133), each identification tag (125, 24) being assigned to a respective product (111, 20) of the batch of products (11);
disposing each identification tag (125, 24) of the batch of identification tags (125, 24) on the respective product (111, 20) of the batch of products (11);
providing a product database (121);
storing a product information (131) of the batch of products (11) and the unique internal codes (133) of the batch of identification tags (125, 24) in the product database (121) and relating the unique internal codes (133) of the batch of identification tags (125, 24) to the product information (131) of the respective product of the batch of products (11);
providing an information device (18) having a display (181) and an application (183), wherein the information device (18) is able to read the identification tags (125, 24) and connect to a network (14);
providing a management platform (123) connected to the product database (121); and
using the information device (18) to read the identification tag (125, 24) disposed on a said product (111, 20) of the batch of products (11) and obtain the unique internal code (133) of the identification tag (125, 24), then using the application (183) to connect the information device (18) to the management platform (123) via the network (14) to display the product information (131) corresponding to the unique internal code (133) on the display (181) of the information device (18).

9. The managing method as claimed in Claim 8, wherein the product inspection process is a random sampling inspection process.

10. The managing method as claimed in Claim 8 or 9, further comprising sealing the batch of products (11) before the step of performing the product inspection process.

11. The managing method as claimed in Claim 10, further comprising applying respective frangible stickers of a batch of frangible stickers (127) for the products (111, 20) of the batch of products (11) and such that the frangible stickers adhere to respective seals (26) of the products (111, 20).

12. The managing method as claimed in Claim 11, wherein each frangible sticker (127, 383) of the batch of frangible stickers (127, 383) is combined with a respective identification tag (125, 381) of the batch of identification tags (125).

13. The managing method as claimed in any one of Claims 8 to 12, further comprising storing a product pedigree (135) of the batch of products (11) in the product database (121) and relating the product pedigree (135) to the product information (131) of the batch of products (11).

14. The managing method as claimed in Claim 13, wherein the application (183) on the information device (18) connects the information device (18) to the management platform (123) via the network (14) and displays the product pedigree (135) corresponding to the unique internal code (133) on the display (181) when a user or a consumer uses the information device (18) to read the identification tag (125, 24) disposed on a said product (111) of the batch of products (11).

15. The managing method as claimed in any one of Claims 8 to 14, wherein the information device (18) is a mobile phone, an RFID reader, a computer, a personal digital assistant or a multimedia device and the product (111) is a food or a food ingredient.
